# EUROPEAN PATENT APPLICATION

(11) **EP 4 373 063 A1**
(43) Date of publication of application: **22.05.2024**
(21) Application number: 23776557.3
(22) Date of filing: 21.09.2023
(51) Int. Cl.: H04M 1/72454, H04M 9/08, H04M 1/02, H04M 1/60

(54) **FOLDABLE ELECTRONIC DEVICE AND METHOD FOR DECREASING ECHO GENERATION**

(30) Priority: 04.10.2022 KR 20220126473; 02.12.2022 KR 20220166605
(71) Applicant: Samsung Electronics Co., Ltd., Suwon-si, Gyeonggi-do 16677 (KR)
(72) Inventor: PARK, Kyungmin, Suwon-si, Gyeonggi-do 16677 (KR)
(74) Representative: Gulde & Partner
(86) International application number: PCT/KR2023/014437
(87) International publication number: WO 2024/076061

(57) **Abstract**

The disclosure relates to a foldable electronic device and a method for reducing echo generation in the electronic device. According to an embodiment, while a first housing area of the electronic device and a second housing area of the electronic device area being folded, an electronic device identifies a folding angle between the first housing area and the second housing area. According to an embodiment, based on that the folding angle being a first threshold angle, the electronic device reduces a volume of at least one speaker to a specified value. According to an embodiment, based on identifying that the first housing area and the second housing area are in a fully folded state, the electronic device performs a call in the fully folded state. Other embodiments are possible.

## Description

### [Technical Field]

The disclosure relates to a foldable electronic device and method for reducing echo generation.

### [Background Art]

Recently, electronic devices have been developed in various forms for user convenience, provide various services or functions, and are implemented as electronic devices suitable for multimedia services while having portability.

In order to fully utilize various services or functions provided by an electronic device, the size of a display of the electronic device may need to be increased. Accordingly, a foldable flexible display may be disposed in the entire area of a housing structure separated to be foldable, and the housing structure may be implemented in a form including one or more speakers and a microphone.

When using an electronic device capable of shape transformation such as folding or unfolding, processing of an audio signal (e.g., an incoming sound or an outgoing sound) may be performed according to a folded state or an unfolded state.

### [Detailed Description of the Invention]

### [Technical Solution]

In an electronic device (e.g., a foldable electronic device) capable of shape transformation, when a part of a housing is folded according to the folding of a flexible display, a relative distance between a microphone and a speaker may change, and thus the speaker and the microphone may be closer to each other to cause a louder incoming sound to be momentarily input into the microphone. Accordingly, an echo phenomenon in which a speaker's voice signal (e.g., an incoming sound) is output again as an outgoing sound may occur, resulting in serious sound quality degradation, or the speaker's voice may not be clearly conveyed. While an electronic device is being folded, the echo reference output from a speaker (SPK) may remain the same, but the echo reference input to a microphone (MIC) input may increase. If the echo reference introduced into the microphone suddenly increases while the magnitude of the echo reference signal remains unchanged, it may be impossible to predict with an echo canceling solution, and thus the echo may not be properly canceled.

In an embodiment of the disclosure, a method for ensuring stable call quality by controlling the output of a speaker in a folded state of an electronic device to reduce echo generation may be provided.

According to an embodiment of the disclosure, an electronic device may include a housing including a first housing area and a second housing area configured to be foldable on each other, at least one microphone disposed on the first housing area, at least one speaker disposed on the second housing area, and at least one processor electrically connected to the at least one microphone and the at least one speaker.

According to an embodiment, the at least one processor may be configured to identify a folding angle between the first housing area and the second housing area while the first housing area and the second housing area are in the middle of being folded.

According to an embodiment, based on the folding angle being a first threshold angle, the at least one processor may be configured to reduce the volume of the at least one speaker of the electronic device to a specified value.

According to an embodiment, based on identifying that the first housing area and the second housing area are in a fully folded state, the at least one processor may be configured to perform a call in the fully folded state.

According to an embodiment, an operation method in an electronic device may include identifying a folding angle between a first housing area of the electronic device and a second housing area of the electronic device while the first housing area and the second housing area are in the middle of being folded.

According to an embodiment, based on the folding angle being a first threshold angle, the method may include reducing the volume of at least one speaker of the electronic device to a specified value.

According to an embodiment, based on identifying that the first housing area and the second housing area are in a fully folded state, the method may include performing a call in the fully folded state.

According to an embodiment, in a non-transitory storage medium storing a program, when executed by a processor of an electronic device, the program may include executable instructions configured to the electronic device to : identifying a folding angle between a first housing area of the electronic device and a second housing area of the electronic device while the first housing area and the second housing area are in the middle of being folded; reducing a volume of at least one speaker of the electronic device to a specified value based on the folding angle being a first threshold angle; and performing a call in a fully folded state based on identifying that the first housing area and the second housing area are in the fully folded state.

### [Brief Description of Drawings]

FIG. 1 is a block diagram of an electronic device in a network environment, according to various embodiments;
FIG. 2 is a view showing a configuration example of an electronic device according to an embodiment;
FIG. 3 is a view showing a configuration example of an electronic device according to an embodiment;
FIG. 4A, FIG. 4B, FIG. 4C and FIG. 4D are views showing an example of a process in which an electronic device according to an embodiment is folded;
FIG. 5 is a flowchart showing an example of an operation method in an electronic device according to an embodiment;
FIG. 6 is a flowchart showing an example of an operation method in an electronic device according to an embodiment;
FIG. 7 is a flowchart showing an example of an operation method in an electronic device according to an embodiment;
FIG. 8 is a view showing an example of a speaker gain table according to an operation in an electronic device according to an embodiment; and
FIG. 9 is a flowchart showing an example of an operation method in an electronic device according to an embodiment.

In relation to the description of the drawings, the same or similar reference numerals may be used for the same or similar elements.

### [Mode for Carrying out the Invention]

Hereinafter, an electronic device according to various embodiments will be described with reference to the accompanying drawings. The term user used in various embodiments may refer to a person using an electronic device or a device using an electronic device (e.g., an artificial intelligence electronic device).

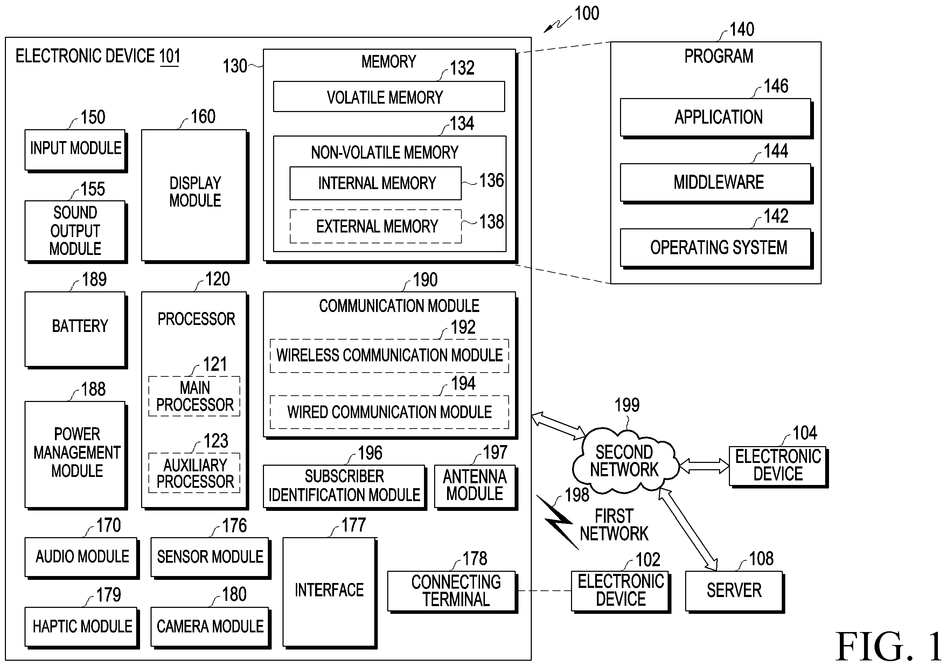

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

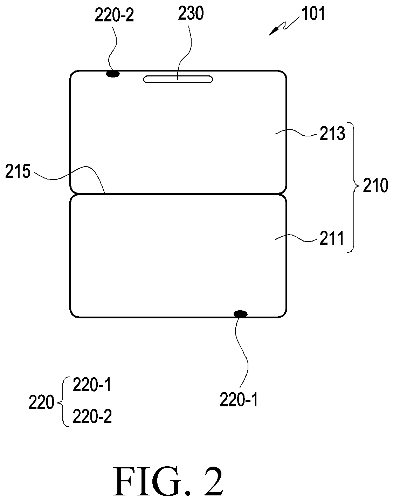

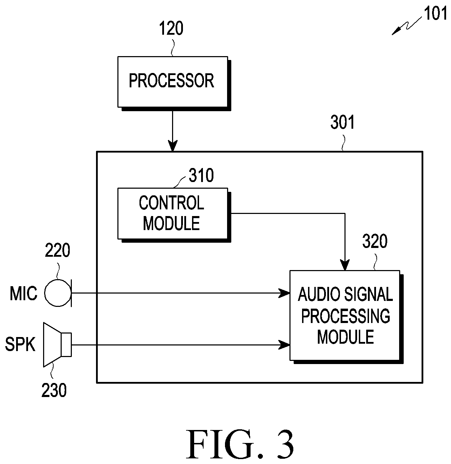

FIG. 2 is a view showing a structure of an electronic device according to an embodiment, and FIG. 3 is a view showing a structure of an electronic device according to an embodiment.

Referring to FIGS. 1, 2, and 3, an electronic device 101 (e.g., the electronic device 101 of FIG. 1) according to an embodiment may be configured such that at least a part of a housing 210 is deformed and folded. The housing 210 may be divided into a first housing area 211 and a second housing area 213, and may be configured such that at least one of the first housing area 211 or the second housing area 213 is folded in a direction in which a first surface of the first housing area 211 (e.g., a front surface where a display of the electronic device 101 is visually exposed) and a first surface of the second housing area 213 (e.g., a front surface where the display of the electronic device 101 is visually exposed) face each other or in a direction opposite thereto with reference to a hinge structure 215 (or a reference line).

According to an embodiment, the electronic device 101 (e.g., the electronic device 101 of FIG. 1) may be configured to include an audio module 301 (e.g., the audio module 170 of FIG. 1) and at least one processor 120. The electronic device 101 may be configured to include a memory (e.g., the memory 130 of FIG. 1) which is electrically connected to the at least one processor 120 and stores commands of operations executed by the at least one processor 120, when the at least one processor 120 is executed, at least one sensor (e.g., the sensor module 176 of FIG. 1), and a communication module (e.g., the communication module 190 of FIG. 1). According to an embodiment, as shown in FIG. 2, the electronic device 101 may be configured to include a microphone 220 (e.g., the input module 150 of FIG. 1) and a speaker 230 (e.g., the sound output module 155 of FIG. 1) configured separately. Without being limited thereto, the electronic device 101 may include a sound component (not shown) in which a microphone structure and a speaker structure are implemented as an integral structure, or include sound components arranged inside parts of the first housing area 211 and the second housing area 213, respectively. According to an embodiment, the electronic device 101 may perform operations to ensure stable call quality during a call in a hands-free call state (e.g., a hands-free call mode).

According to an embodiment, the electronic device 101 may perform a hands-free call via an open call path (e.g., a hands-free open path) or a closed call path (e.g., a hands-free closed path). The open call path may mean a hands-free call mode in a state in which a part of the housing is not completely folded (e.g., a state in which the first housing area 211 and the second housing area 213 are in the middle of being folded) and an open state. The closed call path may refer to a hands-free call mode in a fully folded state. In an embodiment, in the open call path state, by the control of the processor 120, the speaker 230 may output the received voice signal (e.g., the voice signal received from the other party on a call) as a volume value configured in response to the open state or a volume value adjusted (e.g., reduced) according to the folding angle. According to an embodiment, in the closed call path state, the speaker 230 may output the received voice signal (e.g., the voice signal received from the other party on a call) as a volume value configured in response to the completely closed state or a finally adjusted (e.g., reduction completed) volume value. According to an embodiment, the electronic device 101 may adjust an output volume of the speaker 230 at the time of a hands-free call in the open call path or the closed call path, and thus echo generation due to a situation in which the voice signal received from the other party is output to the speaker 230 and then input to the microphone 220 may be reduced.

Referring to FIG. 2, microphones 220, 220-1, and 220-2 according to an embodiment may be arranged inside a portion of the first housing area 211 and the second housing area 213 of the housing 210, respectively. For example, the microphone 220-1 may be disposed (e.g., in the first housing area 211) at a position facing the speaker 230 according to the folding of the first housing area 211 or the second housing area 213 of the housing 210. According to an embodiment, the microphone 220-2 may be disposed at a portion of other area (e.g., the second housing area 213) or an area adjacent to the speaker 230. The electronic device 101 may further include a microphone (not shown) disposed inside a portion of the first housing area 211 or the second housing area 213.

The microphones 220 may receive a voice signal of a caller and transmit the input voice signal to the audio module 301. According to an embodiment, the speaker 230 may be disposed in a part of the second housing area 213 of the housing 210, and may include an element configured to produce sound based on an electrical signal and/or an element configured to convert sound into an electrical signal. According to an embodiment, when a folding angle is a specified first threshold angle before the fully folded state, at least one microphone 220 may reduce reception sensitivity under the control of the at least one processor 120 to reduce echo generation.

According to an embodiment, at least one speaker 230 may be disposed inside a part of the first housing area 211 or the second housing area 213. The at least one speaker 230 may output sound in a direction facing the first housing area 211, and the output sound may travel via a sound waveguide (not shown) provided in an inner space of the housing 210 to be radiated from one side of the second housing area 213 to the outer space. For example, the speaker 230 may be provided as a receiver speaker for outputting an incoming sound in a voice call mode. As another example, in a multimedia mode, the speaker 230 may function as a loudspeaker and be combined with other speaker modules (not shown) to implement stereo sound. According to an embodiment, when a folding angle is a specified first threshold angle before the fully folded state, the at least one speaker 230 may reduce a volume under the control of the at least one processor 120 to reduce echo generation.

According to an embodiment, in an electronic device, if the sound component is configured so that a speaker structure and a receiver structure (e.g., a microphone structure) are integrated, the electronic device may provide different sound operation modes (e.g., a sound operation mode in a hands-free call state) according to an unfolded state and a folded state. For example, when the electronic device 101 is in an unfolded state, the sound component may operate in a speaker mode, and, when the electronic device 101 is in a folded state, the sound component may operate in a speaker mode or a receiver mode (e.g., a microphone mode) according to a user's selection. For example, the speaker mode and/or the receiver mode each may provide a different output voltage. According to an embodiment, for a call, when the electronic device 101 is in a folded state, the user may be able to transmit/receive in any direction by integral sound components located in the first housing area 211 and the second housing area 213. The electronic device 101 may determine the state (e.g., location) of the electronic device 101 by a sensor module 176 (e.g., an acceleration sensor and/or a geomagnetic sensor) disposed therein to provide short-distance transmission and reception suitable for the user. For example, when the user's mouth is located in the second housing area 213 and one of the ears is located in the first housing area 211, the sensor module 176 may determine the state of the electronic device, the sound component located in the first housing area 211 may operate as a speaker, and the sound component located in the second housing area 213 may operate as a microphone. As still another example, when the user's ear is located in the second housing area 213 and the mouth is located in the first housing area 211, the sensor module 176 may determine the state of the electronic device 101, the sound component located in the first housing area 211 may operate as a microphone, and the sound component located in the second housing area 213 may operate as a speaker.

The audio module 301 according to an embodiment may be electrically connected to the at least one processor 120, the microphone 220, and the speaker 230 (or a sound component), and may be configured to process a voice signal input into the microphone 220 (or a sound component) under the control of the at least one processor 120 and to process a signal output to the speaker 230 (or a sound component). According to an embodiment, the audio module 301 may be configured to include a control module 310 and a voice signal processing module 320. The control module 310 may be electrically connected to the processor 120 and the voice signal processing module 320, may operate according to a control command of the processor 120, and may be configured as a software module or a hardware module. According to an embodiment, the control module 310 may be configured to be included in the processor 120 as a software module. The control module 310 may receive, from the processor 120, a folding angle of at least a portion (e.g., the first housing area 211 and/or the second housing area 213) of the housing 210 detected by at least one sensor (e.g., the sensor module 176 of FIG. 1). The control module 310 may transmit, to the voice signal processing module 320, a control signal for processing the received voice signal based on the received folding angle. The folding angle may be obtained by the processor 120 based on movement information of at least a part (e.g., the first housing area 211 and/or the second housing area 213) of the housing 210 or the distance change of at least a part (e.g., the first housing area 211 and/or the second housing area 213), detected by at least one sensor (e.g., the sensor module 176 of FIG. 1) under the control of the processor 120.

According to various embodiments, the voice signal processing module 320 of the audio module 301 may perform an operation for processing a received voice signal under the control of the at least one processor 120. The voice signal processing module 320 may process a voice signal based on a detected folding angle under the control of the processor 120.

The at least one processor 120 of the electronic device 101 according to an embodiment may be electrically connected to at least one microphone 220, at least one speaker 230, and the audio module 301. When a part (e.g., the first housing area 211 and/or the second housing area 213) of the housing 210 is switched from an open state to a folded state while performing a call in the open call path, the at least one processor 120 may perform an operation for reducing a speaker volume so as to reduce a momentary echo generation caused by the voice signal input into a microphone before the fully folded state. According to an embodiment, the at least one processor 120 may reduce echo generation by reducing reception sensitivity of the microphone before the fully folded state.

The at least one processor 120 according to an embodiment may receive a voice signal input via the microphone 220, and identify the folding state of at least a part (e.g., the first housing area 211 and/or the second housing area 213) of the housing 210. The folding state of the at least a part of the housing 210 may be, for example, a state showing that the first housing area 211 and/or the second housing area 213 are rotating (or moving) in a direction facing or opposite to each other around the hinge structure 215.

According to an embodiment, the electronic device 101 may detect the movement of the first housing area 211 or the second housing area 213 or the distance change of the first housing area 211 or the second housing area 213 by using at least one sensor (e.g., the sensor module 176 of FIG. 1) disposed in the first housing area 211 or the second housing area 213. According to an embodiment, when the movement of the first housing area 211 and/or the second housing area 213 around the hinge structure 215 is detected or the relative distance between the first housing area 211 and the second housing area 213 decreases to a small value over time and the first and the second housing area come close to each other, the at least one processor 120 may identify the folding state as a state of being folded. For example, the at least one sensor may be a proximity sensor capable of detecting a distance change between the first housing area 211 and the second housing area 213. Without being limited thereto, the at least one sensor may be another type of sensor (e.g., an acceleration sensor) capable of detecting the folding state of the first housing area 211 and the second housing area 213.

According to an embodiment, the at least one processor 120 may be a portion of the housing 210, and, for example, may detect the movement (or rotation) of the first housing area 211 via at least one sensor (e.g., the sensor module 176 of FIG. 1), and acquire a folding angle according to the folding obtained based on the detected movement information. The folding angle may indicate an angle between the first housing area 211 and the second housing area 213.

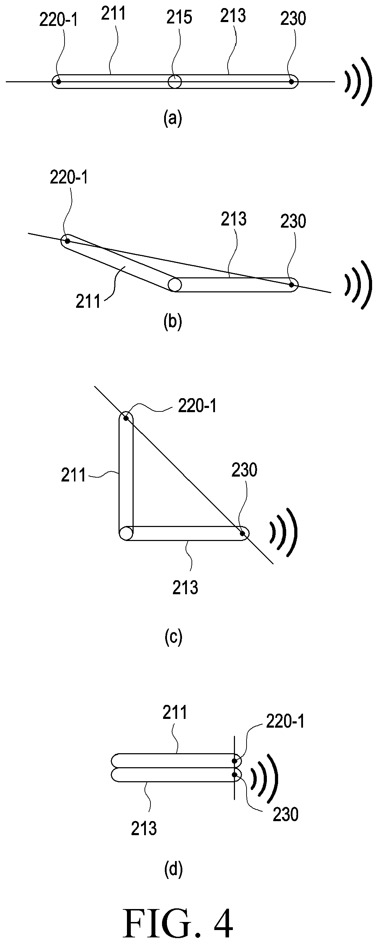

FIG. 4A, FIG. 4B, FIG. 4C and FIG. 4D are views showing an example of a process in which an electronic device according to an embodiment is folded.

Referring to FIGS. 1, 2, 3, and 4A to 4D, according to an embodiment, an electronic device may continuously detect the folding angle between the first housing area 211 and the second housing area 213 until the electronic device is switched to a fully folded state or a stopped state, by using at least one sensor (e.g., a proximity sensor or a Hall IC) disposed in the first housing area 211 or the second housing area 213.

According to an embodiment, as shown in FIG. 4A, when the movement of the first housing area 211 and/or the second housing area 213 around the hinge structure 215 is not detected and an angle between the first housing area 211 and the second housing area 213 is 180 degrees, the at least one processor 120 may identify the unfolded state of the electronic device 101.

According to an embodiment, as shown in FIG. 4B, when identifying that the angle is changed (e.g., changed to about 30 degrees) according to the rotation of the first housing area 211 of the housing 210 in a direction facing the second housing area 213, the at least one processor 120 may identify that the electronic device 101 is switching from the unfolded state to a folded state.

According to an embodiment, as shown in FIG. 4C, when identifying that the folding angle is, for example, 90 degrees according to the continuous rotation of the first housing area 211 of the housing 210 in a direction facing the second housing area 213, the at least one processor 120 may identify that the electronic device 101 is being folded continuously. According to an embodiment, as the first housing area 211 of the housing 210 continuously rotates in a direction facing the second housing area 213, the at least one processor 120 may identify that the folding angle is, for example, a specified first threshold angle (e.g., a specified angle within the angle range less than 90 degrees and greater than about 10 degrees) while reducing to less than 90 degrees. When identifying that the folding angle is a first threshold angle, the at least one processor 120 may reduce the volume of the speaker 230 to a specified value to reduce echo generation. In the present case, identifying that the folding angle is a first threshold angle means that a first threshold angle has been reached. For example, in case a rotation stops shortly after a first threshold angle has been reached, this is still interpreted as a folding angle being the first threshold angle.

According to an embodiment, when identifying that the folding angle is a second threshold angle (e.g., about 10 degrees) or is less than or equal the second threshold angle (e.g., approximately 10 degrees or less and greater than 0 degrees) according to a continuous rotation of the first housing area 211 of the housing 210 in a direction facing the second housing area 213, the at least one processor 120 may identify that the first housing area 211 of the housing 210 is in a state immediately before being fully folded. In other words, the electronic device is about to be fully folded, which may mean that the angle is close to e.g. 0 degrees. In a state immediately before being fully folded, the at least one processor 120 may reduce the transmission output volume for a configured time period (e.g., 1 second) so as to reduce the output of the instrumental impact sound as an incoming sound according to the full folding. In other words, the transmission output volume is temporarily reduced.

According to an embodiment, as shown in FIG. 4D, when identifying that the folding angle is 0 degrees according to the continuous rotation of the first housing area 211 of the housing 210 in a direction facing the second housing area 213, the at least one processor 120 may identify that the first housing area 211 of the housing 210 is in the fully folded state and may switch to a closed call path (e.g., a hands-free closed path). The at least one processor 120 may perform a call (e.g., hands-free call) in a closed call path.

According to an embodiment, the at least one processor 120 may identify the folding speed by using at least one sensor (e.g., an acceleration sensor) and, when the folding speed is greater than or equal to a threshold speed, may identify that the electronic device is in a fast-folding state. In the fast-folding state, the at least one processor 120 may not perform the detection operation of the folding angle and may immediately reduce the speaker volume to a specified value. In other words, the detection operation of the folding angle is skipped in such case. The specified value of the speaker volume may be a value dedicated for a case in which the detection operation of the folding angle is skipped, i.e. different from speaker gain values used when a detection operation of the folding angle is performed.

According to an embodiment, the at least one processor 120 may compare the folding speed detected for a specified time period from the timepoint where the folding of the first housing area and the second housing area starts, to a specified threshold speed, and may identify the fast-folding state. The folding speed may indicate the degree to which the angle between the first housing area 211 and the second housing area 213 changes per second.

According to an embodiment, in the folding state, the at least one processor 120 may reduce the volume of the speaker 230 to the volume value configured for each folding angle while being folded by using a speaker gain table including a folding angle and stored in a memory (e.g., the memory 130 of FIG. 1). The speaker gain table is a table in which a speaker gain value is configured for each folding angle between the first housing area and the second housing area, when the folding angle is, for example, 90 degrees, the speaker gain value is configured to be a default value, and, by dividing the folding angle step by step into a specified angle range (e.g., 10 degrees) from 80 degrees to 0 degrees, the speaker gain value (e.g., values reduced by a unit of -2 dB from -2 dB to -18 dB) for reducing the speaker volume for each divided step may be mapped. A speaker gain table may also comprise folding angles in steps of 5 degrees and corresponding values reduced by a unit of -1 dB, for example. The upper value of 90 degrees for the folded angle is just an example and not limiting.

According to an embodiment, when there is no change in the folding angle or folding speed for a specified period of time during folding, or no movement of the first housing area 211 or/and the second housing area 213 is detected, the at least one processor 120 may identify a stopped state in which the folding operation is stopped, maintain a speaker volume adjusted in response to a current folding angle, or maintain a speaker volume specified in an open call path, to perform a call. Hence, a stopped state of the folding operation may occur when the folding angle is greater than 0 degrees.

According to the above-described embodiment, the at least one processor 120 may increase the speaker volume or increase the reception sensitivity of the microphone, as opposed to the operations during folding, while at least a part of the housing 210 is unfolded. While at least a part of the housing is unfolded, based on the operations according to the above-described embodiment, when the unfolded angle is a specified threshold angle on the contrary, the electronic device may increase the specified speaker volume, or may increase the speaker volume to the volume value configured for each unfolded angle. In addition to a foldable form of the electronic device 101, like a rollable or slidable form, even when a partial area of the electronic device 101 is in a folded or unfolded form, operations according to the above-described embodiment may be equally applied. In the description of FIGS. 2 and 4A to 4D, as an example, it has been described that the microphone 220-1 is disposed in the first housing area 211, and the speaker 230 is disposed in the second housing area 213, but the disclosure is not limited thereto. Microphones (e.g., stereo microphones) may be arranged in the first housing area 211 and the second housing area 213, respectively, and speakers (e.g., stereo speakers) may be arranged in the first housing area 211 and the second housing area 213, respectively.

In the above embodiment, main elements of an electronic device have been described via the electronic device 101 of FIGS. 1, 2, and 3. However, in various embodiments, all the elements shown in FIGS. 1, 2, and 3 may not be essential elements, the electronic device 101 may be implemented by more elements than those shown, and the electronic device 101 may be implemented with fewer elements, i.e. elements may be omitted. In addition, positions of the main elements of the electronic device 101 described above with reference to FIGS. 1, 2, and 3 may be changeable according to various embodiments.

According to an embodiment, an electronic device (e.g., the electronic device 101 of FIGS. 1, 2, and 3) may include a housing including a first housing area (e.g., the first housing area 211 of FIGS. 2 and 4A to 4D) and a second housing area (e.g., the second housing area 213 of FIGS. 2 and 4A to 4D) configured to be foldable on each other, at least one microphone (e.g., the microphone 220 of FIGS. 2, 3, and 4A to 4D) disposed on the first housing area, at least one speaker (e.g., the speaker 230 of FIGS. 2, 3, and 4A to 4D) disposed on the second housing area, and at least one processor (e.g., the processor 120 of FIGS. 1 and 3) electrically connected to the at least one microphone and the at least one speaker.

According to an embodiment, the at least one processor may be configured to identify the folding angle between the first housing area and the second housing area while the first housing area and the second housing area are folded.

According to an embodiment, based on the folding angle being a first threshold angle, the at least one processor may be configured to reduce the volume of the at least one speaker of the electronic device to a specified value.

According to an embodiment, based on identifying that the first housing area and the second housing area are in a fully folded state, the at least one processor may be configured to perform a call (e.g., a hands-free call) in the fully folded state.

According to an embodiment, the at least one processor may be configured to perform a call (e.g., a hands-free call) while the first housing area and the second housing area are in an open state, and, based on movement of the first housing area or the second housing area or distance change of the first housing area and the second housing area, to identify a state in which the first housing area and the second housing area are in the middle of being folded in the open state.

According to an embodiment, the folding angle may be detected using a proximity sensor or a Hall IC sensor.

According to an embodiment, the electronic device may further include at least one sensor for detecting the folding movement of the first housing area and the second housing area around a hinge structure (e.g., the hinge structure 215 of FIGS. 2 and 4A) of the electronic device. According to an embodiment, at least one processor may be configured to detect the folding speed using the at least one sensor, and, when the folding speed exceeds a threshold speed, identify that the first housing area and the second housing area are in the middle of being folded fast.

According to an embodiment, when the folding speed exceeds a specified threshold speed, the at least one processor may be configured to reduce the speaker volume to the specified value without the detection of the folding angle.

According to an embodiment, when the folding speed is less than a specified threshold speed, the at least one processor may be configured to identify whether the folding angle is less than or equal to a specified first threshold angle.

According to an embodiment, the at least one processor may be configured to identify whether the folding angle is included in a speaker gain table stored in a memory of the electronic device, and, based on the folding angle being included in the speaker gain table, reduce the volume of the speaker by applying a speaker gain value set to correspond to the folding angle.

According to an embodiment, the at least one processor may be configured to sequentially identify a folding angle before the fully folded state, and sequentially reduce the volume of the speaker with the speaker gain value set to correspond to the detected folding angle.

According to an embodiment, based on the folded angle being a specified second threshold angle, the at least one processor may be configured to identify that the first housing area and the second housing area are immediately before the fully folded state and reduce the volume of a transmission output signal for a specified time period.

According to an embodiment, when the first housing area and the second housing area are in a stopped state in which folding is stopped before the fully folded state while being folded, the at least one processor may be configured to maintain a call volume set in an open state or maintain a speaker volume corresponding to a current folding angle as a call volume.

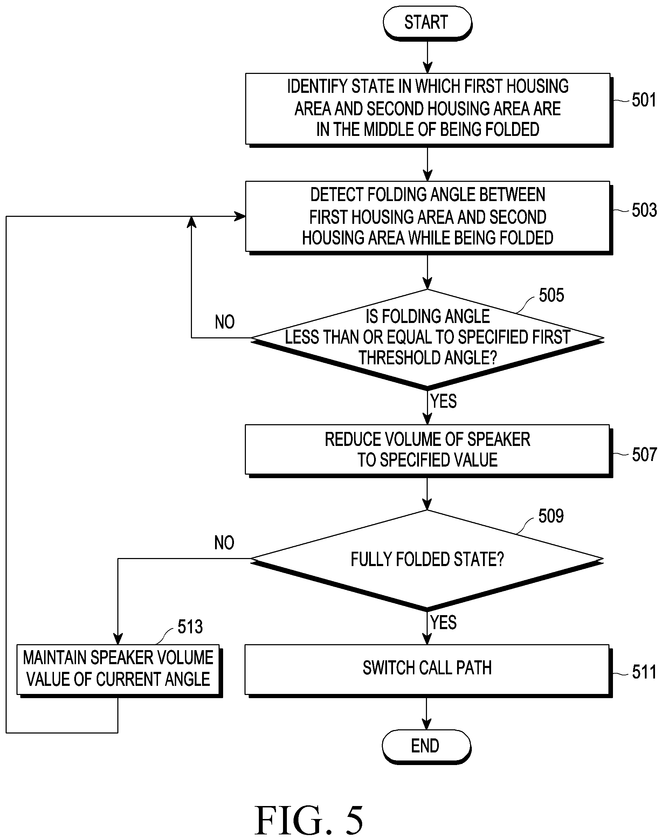

FIG. 5 is a flowchart showing an example of an operation method in an electronic device according to an embodiment.

Referring to FIG. 5, in operation 501, an electronic device (e.g., the electronic device of FIGS. 1, 2, and 3) according to an embodiment may identify the folding state of a first housing area (e.g., the first housing area 211 of FIGS. 2 and 4A to 4D) and a second housing area (e.g., the second housing area 213 of FIGS. 2 and 4A to 4D) while performing a call (e.g., a hands-free call) of a call mode (e.g., a hands-free open path) in an open state. According to an embodiment, the electronic device may process a voice signal received while performing a call to output a sound signal of a configured speaker volume via a speaker (e.g., the speaker 230 of FIGS. 2, 3, and 4A to 4D). According to an embodiment, the electronic device may detect the movement of a first housing area or a second housing area or the distance change of the first housing area and the second housing area by using at least one sensor (e.g., the sensor module 176 of FIG. 1) disposed in the first housing area or the second housing area. The electronic device may identify the switching from an open state to a folded state based on the detected movement or distance change. For example, the at least one sensor may be a proximity sensor capable of detecting the distance change of the first housing area and the second housing area. Without being limited thereto, the at least one sensor may be a different type of a sensor (e.g., an acceleration sensor) capable of detecting the folding state of the first housing area and the second housing area. According to an embodiment, as shown in FIG. 4A to 4D, the electronic device may identify that a first surface of the second housing area where a speaker is disposed and a first surface of the first housing area where a microphone is disposed are in the middle of being folded in a direction facing each other.

In operation 503, the electronic device may identify the folding angle between the first housing area and the second housing area while being folded. According to an embodiment, the electronic device may continuously detect the folding angle between the first housing area and the second housing area until being switched to a fully folded state or a stopped state, by using at least one sensor (e.g., a proximity sensor or a Hall IC) disposed in the first housing area or the second housing area.

In operation 505, the electronic device may identify whether the folding angle is less than a first threshold angle within a specified angle range. As a result of the identification, when the folding angle is less than or equal to the first threshold angle, the electronic device may perform operation 507, and, when the folding angle is greater than the first threshold angle, the electronic device may perform operation 503.

In operation 507, based on the folding angle being the first threshold angle within the specified angle range, the electronic device may reduce the speaker volume to a specified value (e.g., -16 dB) for the output volume of the received voice signal.

In operation 509, the electronic device may identify whether the first housing area and the second housing area are in a fully folded state. As a result of the identification, when the housing areas are in a fully folded state, the electronic device may perform operation 511, and, when the housing areas are not in the fully folded state, the electronic device may perform operation 513.

In operation 511, the electronic device may identify that the first housing area and the second housing area are in a fully folded state, and, based on the identified folded state, may switch the call mode to a closed call path (a hands-free closed path), and may terminate an operation for limiting echo in the voice signal.

In operation 513, the electronic device may maintain a specified speaker volume in an open state (e.g., an open call path (a hands-free open path) in an open state) to perform a call.

According to an embodiment, the electronic device may identify the folding angle while the first housing area and the second housing area are in the middle of being folded as in operation 503, when identifying a stopped state in which the folding stops before the fully folded state, stop the above-described operation for limiting echo, and maintain, in the stopped state, the speaker volume specified in the open state to perform a call.

The afore-described operation is not limited to a folding operation but may also be applied when unfolding a foldable electronic device. For example, when the unfolding angle is the specified threshold angle, the electronic device may increase the specified speaker volume or increase the speaker volume to a volume value configured for each unfolded angle.

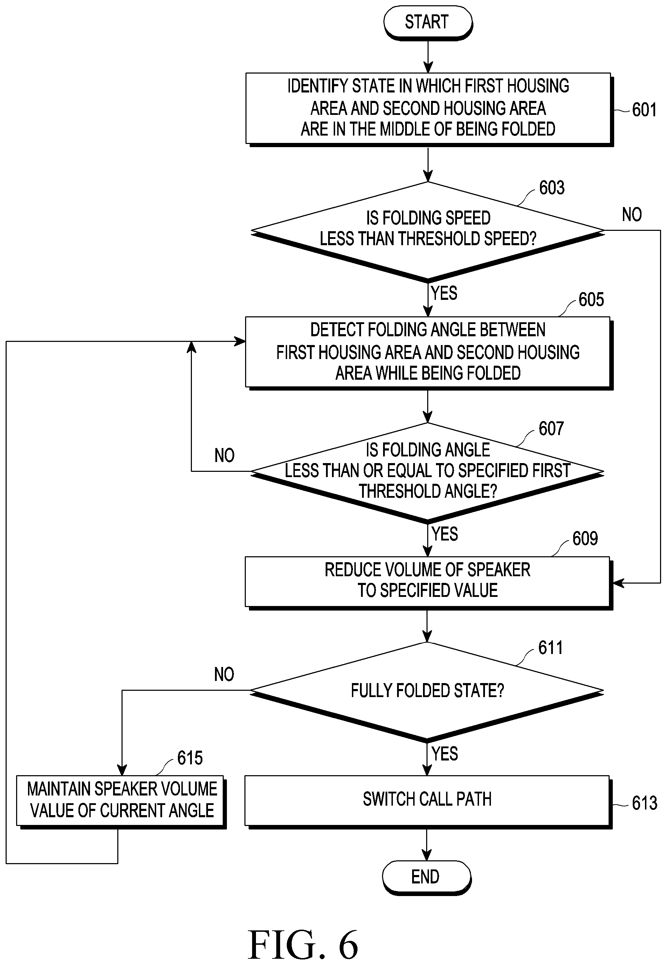

FIG. 6 is a flowchart showing an example of an operation method in an electronic device according to an embodiment.

Referring to FIG. 6, in operation 601, an electronic device (e.g., the electronic device 101 of FIGS. 1, 2, and 3) according to an embodiment may identify a state in which a first housing area (e.g., the first housing area 211 of FIGS. 2 and 4A to 4D) and a second housing area (e.g., the second housing area 213 of FIGS. 2 and 4A to 4D) are in the middle of being folded, while performing a call (e.g., a hands-free call) of a call mode (e.g., a hands-free open path) in an open state. According to an embodiment, the electronic device may process the voice signal received while performing a call and output a sound signal of a configured speaker volume via a speaker (e.g., the speaker 230 of FIGS. 2, 3, and 4A to 4D). According to an embodiment, the electronic device may detect the movement of the first housing area or the second housing area or the distance change of the first housing area and the second housing area by using at least one sensor (e.g., the sensor module 176 of FIG. 1) disposed in the first housing area or the second housing area. The electronic device may identify the switching from the open state to the folded state based on the detected movement or distance change. For example, the at least one sensor may be a proximity sensor capable of detecting the distance change of the first housing area and the second housing area. Without being limited thereto, the at least one sensor may be a different type of a sensor (e.g., an acceleration sensor) capable of detecting a state in which the first housing area and the second housing area are in the middle of being folded. According to an embodiment, as shown in FIG. 4A to 4D, the electronic device may identify that a first surface of the second housing area where a speaker is disposed and a first surface of the first housing area where a microphone is disposed are in the middle of being folded in a direction facing each other.

In operation 603, the electronic device may identify the folding speed by using at least one sensor (e.g., an acceleration sensor), and identify whether the folding speed is less than a threshold speed. As a result of the identification, when the folding speed is less than the threshold speed, the electronic device may perform operation 605. When the folding speed is greater than or equal to the threshold speed, the electronic device may identify that the first housing area and the second housing area are in the middle of being folded fast, and may immediately perform operation 609 without performing detection of the folding angle, i.e. identifying a folding angle between the first housing area and the second housing area is skipped. According to an embodiment, the electronic device may compare, to a specified threshold speed, the folding speed detected from the timepoint at which the folding of the first housing area and the second housing area begins for a specified time period, and may thus identify the first housing area and the second housing area are in the middle of being folded fast.

In operation 605, based on the folding speed being less than a threshold speed, the electronic device may identify the folding angle between the first housing area and the second housing area while being folded. According to an embodiment, the electronic device may continuously detect the folding angle between the first housing area and the second housing area until being switched to a fully folded state or a stopped state, by using at least one sensor (e.g., a proximity sensor or a Hall IC) disposed in the first housing area or the second housing area.

In operation 607, the electronic device may identify whether the folding angle is less than or equal to a first threshold angle within a specified angle range. As a result of the identification, when the folding angle is less than or equal to the first threshold angle, the electronic device may perform operation 609, and, when the folding angle is greater than the first threshold angle, the electronic device may perform operation 605.

In operation 609, the electronic device may reduce the speaker volume to a specified value (e.g., a gain value less than or equal to -16 dB) for the output volume of the received voice signal.

In operation 611, the electronic device may identify whether the first housing area and the second housing area are in a fully folded state. As a result of the identification, when the housing areas are in the fully folded state, the electronic device may perform operation 613, and, when the housing areas are not in the fully folded state, the electronic device may perform operation 615.

In operation 613, the electronic device may identify that the first housing area and the second housing area are in a fully folded state, and, based on the identified folded state, may switch a call mode to a closed call path (a hands-free closed path), and may terminate an operation for limiting echo in the voice signal.

In operation 615, the electronic device may maintain the speaker volume specified in an open state (e.g., an open call path (a hands-free open path) of an open state) to perform a call.

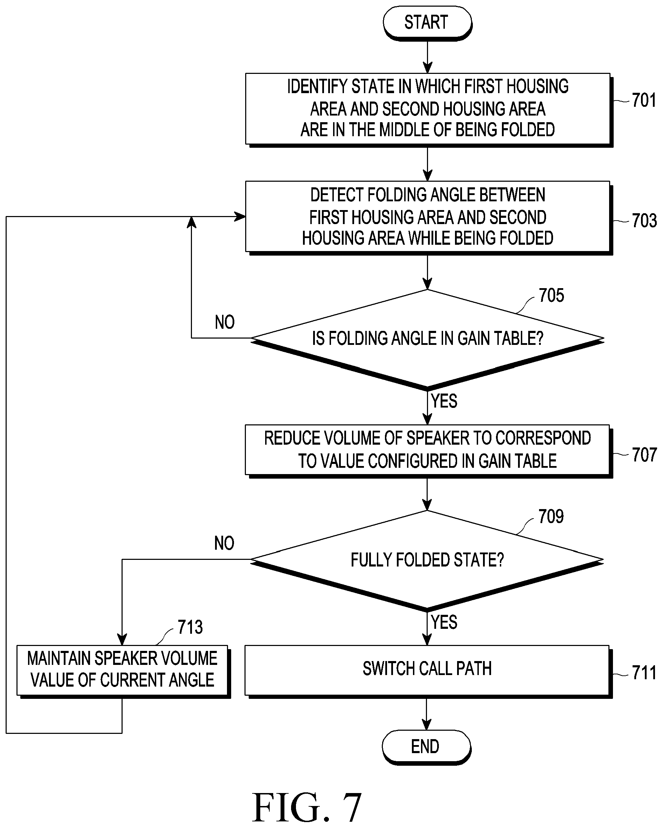

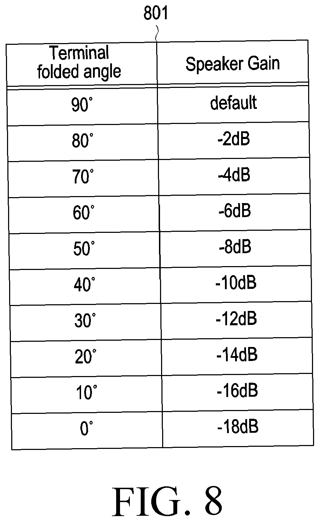

FIG. 7 is a flowchart showing an example of an operation method in an electronic device according to an embodiment, and FIG. 8 is a view showing an example of a speaker gain table according to an operation in an electronic device according to an embodiment.

Referring to FIG. 7, in operation 701, an electronic device (e.g., the electronic device 101 of FIGS. 1, 2, and 3) according to an embodiment may identify the folding state of a first housing area (e.g., the first housing area 211 of FIGS. 2 and 4A to 4D) and a second housing area (e.g., the second housing area 213 of FIGS. 2 and 4A to 4D) while performing a call (e.g., a hands-free call) of a call mode (e.g., a hands-free open path) in an open state. According to an embodiment, the electronic device may process a voice signal received while performing a call to output a sound signal of a configured speaker volume via a speaker (e.g., the speaker 230 of FIGS. 2, 3, and 4A to 4D). According to an embodiment, the electronic device may detect the movement of the first housing area or the second housing area or the distance change of the first housing area and the second housing area by using at least one sensor (e.g., the sensor module 176 of FIG. 1) disposed in the first housing area or the second housing area. The electronic device may identify the switching from the open state to the folded state based on the detected movement or distance change. For example, the at least one sensor may be a proximity sensor capable of detecting the distance change of the first housing area and the second housing area. Without being limited thereto, the at least one sensor may be a different type of a sensor (e.g., an acceleration sensor) capable of detecting a state where the first housing area and the second housing area are in the middle of being folded. According to an embodiment, as shown in FIG. 4A to 4D, the electronic device may identify that a first surface of the second housing area where a speaker is disposed and a first surface of the first housing area where a microphone is disposed are in the middle of being folded in a direction facing each other or a direction opposite thereto.

In operation 703, the electronic device may identify the folding angle between the first housing area and the second housing area while being folded. According to an embodiment, the electronic device may continuously detect the folding angle between the first housing area and the second housing area until being switched to a fully folded state or a stopped state, by using at least one sensor (e.g., a proximity sensor or a Hall IC) disposed in the first housing area or the second housing area.

In operation 705, the electronic device may identify whether the folding angle is included in a gain table 801 stored in a memory (e.g., the memory 130 of FIG. 1). As a result of the identification, when the folding angle is included in the gain table 801, the electronic device may perform operation 707, and, when the folding angle is not included in the speaker gain table 801, the electronic device may perform operation 703. A folding angle being included in the speaker gain table 801 may also be interpreted such that the value of the folding angle lies between two values defined in the speaker gain table 801, e.g. 78° lies between 70° and 80° and hence, a speaker gain of -2 dB is applied. The speaker gain table 801 is a table in which speaker gain values are configured for each folding angle between the first housing area and the second housing area, when the folding angle is, for example, 90 degrees, a default value may be configured, the folding angle may be divided into stages with a specified angle range (e.g., 10 degrees) from 80 degrees to 0 degrees such that speaker gain values (e.g., values reduced in -2dB increments from -2dB to -18dB) for reducing a speaker volume are mapped for each divided stage.

In operation 707, based on the folding angle included in the gain table 801, the electronic device may reduce the speaker volume using a speaker gain value configured to correspond to the detected folding angle for the output volume of the received voice signal.

In operation 709, the electronic device may identify whether the first housing area and the second housing area are in a fully folded state. As a result of the identification, when the housing areas are in the fully folded state, the electronic device may perform operation 711, and, when the housing areas are not in the fully folded state, the electronic device may perform operation 713.

In operation 711, the electronic device may identify that the first housing area and the second housing area are in the fully folded state, based on the identified folding state, may switch a call mode to a closed call path (a hands-free closed path), and may terminate an operation for limiting echo in the voice signal.

In operation 713, the electronic device may maintain the speaker volume of a current folding angle as a call volume in an open state (e.g., an open call path (a hands-free open path) of an open state) to perform a call.

According to an embodiment, the electronic device may identify the folding angle while the first housing area and the second housing area are in the middle of being folded, when identifying a stopped state in which the folding stops before the fully folded state, stop the above-described operation for limiting echo, and maintain, in the stopped state, the speaker volume of the current angle as a call volume, or when the stopped state maintains for a specified time period or more or is switched to the open state, perform a call with a specified call volume in an open call path (a hands-free open path).

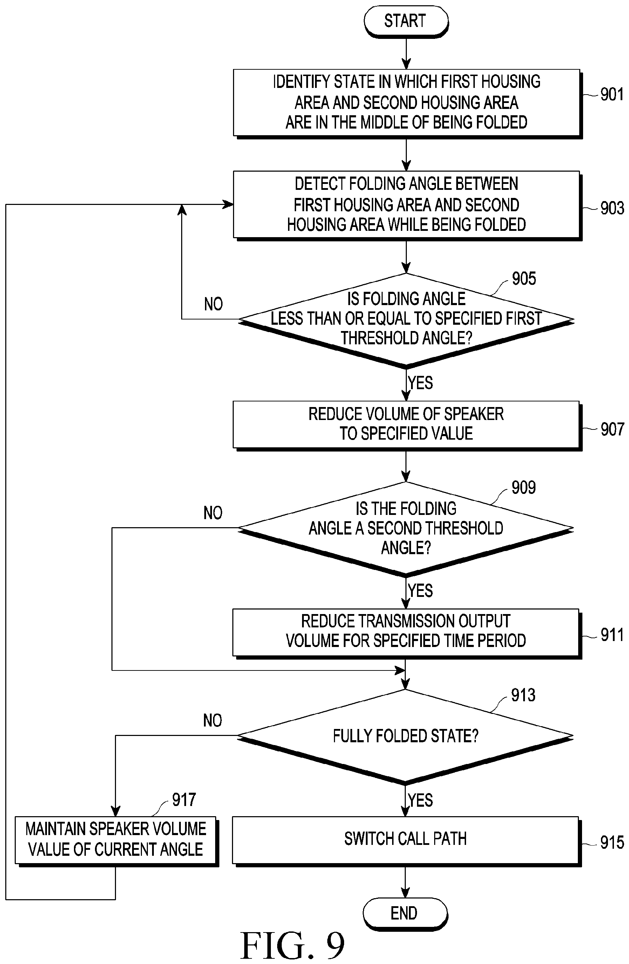

FIG. 9 is a flowchart showing an example of an operation method in an electronic device according to an embodiment.

Referring to FIG. 9, in operation 901, an electronic device (e.g., the electronic device 101 of FIGS. 1, 2, and 3) according to an embodiment may identify a state in which a first housing area (e.g., the first housing area 211 of FIGS. 2 and 4A to 4D) and a second housing area (e.g., the second housing area 213 of FIGS. 2 and 4A to 4D) are in the middle of being folded, while performing a call (e.g., a hands-free call) of a call mode (e.g., a hands-free open path) in an open state. According to an embodiment, the electronic device may process the voice signal received while performing a call and output a sound signal of a configured speaker volume via a speaker (e.g., the speaker 230 of FIGS. 2, 3, and 4A to 4D). According to an embodiment, the electronic device may detect the movement of the first housing area or the second housing area or the distance change of the first housing area and the second housing area by using at least one sensor (e.g., the sensor module 176 of FIG. 1) disposed in the first housing area or the second housing area. The electronic device may identify the switching from the open state to the folded state based on the detected movement or distance change. For example, the at least one sensor may be a proximity sensor capable of detecting the distance change of the first housing area and the second housing area. Without being limited thereto, the at least one sensor may be a different type of a sensor (e.g., an acceleration sensor) capable of detecting a state in which the first housing area and the second housing area are in the middle of being folded. According to an embodiment, as shown in FIG. 4A to 4D, the electronic device may identify that a first surface of the second housing area where a speaker is disposed and a first surface of the first housing area where a microphone is disposed are in the middle of being folded in a direction facing each other.

In operation 903, the electronic device may identify a folding angle between the first housing area and the second housing area while being folded. According to an embodiment, the electronic device may continuously detect the folding angle between the first housing area and the second housing area until being switched to a fully folded state or a stopped state, by using at least one sensor (e.g., a proximity sensor or a Hall IC) disposed in the first housing area or the second housing area.

In operation 905, the electronic device may identify whether the folding angle is less than or equal to a first threshold angle within a specified angle range. As a result of the identification, when the folding angle is less than or equal to the first threshold angle, the electronic device may perform operation 907, and, when the folding angle is greater than the first threshold angle, the electronic device may perform operation 903.

In operation 907, the electronic device may reduce the speaker volume to a specified value (e.g., -16 dB) for the output volume of the received voice signal, based on the folding angle being less than or equal to the first threshold angle within the specified angle range.

In operation 909, the electronic device may identify whether the folding angle is a second threshold angle within a specified angle range. The second threshold angle may be an angle (e.g., an angle less than or equal to 10 degrees and greater than 0 degrees) immediately before the fully folded state. As a result of the identification, when the folding angle is the second threshold angle, the electronic device may perform operation 911, and, when the folding angle is not the second threshold angle, the electronic device may perform operation 913. The expression 'immediately before the fully folded state' may also include a folding angle being less than or equal to 7 degrees and greater than 0 degrees or a folding angle being less than or equal to 4 degrees and greater than 0 degrees, for example.

In operation 911, the electronic device may reduce the volume of a transmission output signal to a specified value for a specified time period (e.g., 1 second) so as to reduce the output of the instrumental impact sound as an incoming sound while being folded, based on the folding angle is the second threshold angle.

In operation 913, the electronic device may identify whether the first housing area and the second housing area are in a fully folded state. As a result of the identification, when the housing areas are in the fully folded state, the electronic device may perform operation 915, and, when the housing areas are not in the fully folded state, the electronic device may perform operation 917.

In operation 915, the electronic device may identify that the first housing area and the second housing area are in the fully folded state, based on identifying as the folded state, switch a call mode to a closed call path (a hands-free closed path), and terminate an operation for limiting echo in a voice signal.

In operation 917, the electronic device may maintain the speaker volume of the current angle in an open state (e.g., an open call path (a hands-free open path) in an open state) to perform a call.

According to an embodiment, while at least a part of the housing is being folded, based on the above-described operations as shown in FIGS. 6 to 9, conversely, when the unfolding angle is the specified threshold angle, the electronic device may increase the specified speaker volume or increase the speaker volume to a volume value configured for each unfolded angle. According to an embodiment, based on the above-described operations of the housing and FIGS. 6 to 9, the electronic device may reduce reception sensitivity of the microphone before the fully folded state to reduce echo generation.

According to an embodiment, an operation method in an electronic device (e.g., the electronic device 101 of FIGS. 1, 2, and 3) may include identifying a folding angle between the first housing area and the second housing area while the first housing area (e.g., the first housing area 211 of FIG. 2) of the electronic device and the second housing area (e.g., the second housing area 213 of FIG. 2) of the electronic device are in the middle of being folded.

According to an embodiment, based on the folding angle being a first threshold angle, the method may include reducing the volume of at least one speaker (e.g., the speaker 230 of FIGS. 2, 3, and 4A to 4D) of the electronic device to a specified value.

According to an embodiment, based on identifying that the first housing area and the second housing area are in the fully folded state, the method may include performing a call (e.g., a hands-free call) in the fully folded state.

According to an embodiment, the method may further include performing a call while the first housing area and the second housing area are in the open state, and, based on the movement of the first housing area or the second housing area or the distance change of the first housing area and the second housing area, identifying that the first housing area and the second housing area are in the middle of being folded in the open state.

According to an embodiment, the method may further include detecting the folding speed while the first housing area and the second housing area are in the middle of being folded by using at least one sensor, and, when the folding speed exceeds a threshold speed, identifying that the first housing area and the second housing area are in the middle of being folded fast.

According to an embodiment, when the folding speed exceeds a specified threshold speed, the method may further include reducing the speaker volume to the specified value without the detection of the folding angle.

According to an embodiment, when the folding speed is less than a specified threshold speed, the method may further include identifying whether the folding angle is less than or equal to a specified first threshold angle.

According to an embodiment, reducing the volume of the at least one speaker to a specified value may include identifying whether the folding angle is included in a speaker gain table stored in a memory of the electronic device, and, based on the folding angle being included in the speaker gain table, reduce the volume of the speaker by applying a speaker gain value set to correspond to the folding angle.

According to an embodiment, reducing the volume of the at least one speaker to a specified value may include sequentially reducing the volume of the speaker to the speaker gain value set to correspond to the folding angle sequentially detected before the fully folded state.

According to an embodiment, reducing the volume of the at least one speaker to a specified value may include identifying that the first housing area and the second housing area are immediately before the fully folded state and reducing the volume of a transmission output signal for a specified time period, based on the folding angle being a specified second threshold angle.

According to an embodiment, when the first housing area and the second housing area are in a stopped state in which folding is stopped before the fully folded state while being folded, the method may further include maintaining a call volume set in an open state of the first housing area and the second housing area or maintaining a speaker volume corresponding to a current folding angle as a call volume.

According to an embodiment, in a non-transitory storage medium storing a program, when executed by a processor (e.g., the processor 120 of FIGS. 1 and 3) of an electronic device (e.g., the electronic device 101 of FIGS. 1, 2, and 3), the program may include executable instructions configured to, cause the electronic device to identifying a folding angle between a first housing area and a second housing area while the first housing area (e.g., the first housing area 211 of FIGS. 2 and 4A to 4D) of the electronic device and the second housing area (e.g., the second housing area 213 of FIGS. 2 and 4A to 4D) of the electronic device are in the middle of being folded, based on the folding angle being a first threshold angle, reducing a volume of at least one speaker (e.g., the speaker 230 of FIGS. 2, 3, and 4A to 4D) of the electronic device to a specified value, and, based on identifying that the first housing area and the second housing area are in a fully folded state, performing a call in the fully folded state.

According to the operations for reducing echo according to the above-described embodiment, the electronic device may control the output of a speaker to reduce echo which may occur due to a foldable instrumental structure, and may reduce echo to the other party of a call regardless of an unfolded or folded (open/closed) state of the electronic device to provide high-quality transmi ssi on/recepti on.

In addition, various effects identified directly or indirectly via the disclosure may be provided.

The embodiments disclosed herein are presented for explanation and understanding of the disclosed technical content, and do not limit the scope of the technology described in the disclosure. Therefore, the scope of the disclosure should be construed to include all changes or various other embodiments based on the technical idea of the disclosure.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a housing (210) including a first housing area (211) and a second housing area (213) configured to be foldable on each other;
at least one microphone (220) disposed on the first housing area (211);
at least one speaker (230) disposed on the second housing area (213); and
at least one processor (120) electrically connected to the at least one microphone (220) and the at least one speaker (230),
wherein the at least one processor (120) is configured to:
identify (503; 605; 703; 903) a folding angle between the first housing area (211) and the second housing area (213) while the first housing area (211) and the second housing area (213) are in the middle of being folded;
based on the folding angle being a first threshold angle, reduce (507; 609; 707; 907) the volume of the at least one speaker (230) of the electronic device (101) to a specified value; and
based on identifying (509; 611; 709; 913) that the first housing area (211) and the second housing area (213) are in a fully folded state, perform a call in the fully folded state.

2. The electronic device of claim 1, wherein the at least one processor (120) is configured to:
perform a call in an open state of the first housing area (211) and the second housing area (213); and
based on the movement of the first housing area (211) or the second housing area (213) or a distance change of the first housing area (211) and the second housing area (213), identify (501; 601; 701; 901) a state in which the first housing area (211) and the second housing area (213) are in the middle of being folded in the open state, and
wherein the folding angle is detected using a proximity sensor or a Hall IC sensor.

3. The electronic device of any one of claims 1 to 2, further comprising at least one sensor configured to detect the folding movement of the first housing area (211) and the second housing area (213) around a hinge structure (215) of the electronic device (101),
wherein the at least one processor (120) is configured to:
detect (603) a folding speed using the at least one sensor; and
in case that the folding speed exceeds a specified threshold speed, identify that the first housing area (211) and the second housing area (213) are in the middle of being folded fast and reduce (609) the volume of the speaker (230) to the specified value without the detection of the folding angle, or
in case that the folding speed is less than the specified threshold speed, identify (607) whether the folding angle is less than or equal to the specified first threshold angle.

4. The electronic device of any one of claims 1 to 3, wherein the at least one processor (120) is configured to:
identify (705) whether the folding angle is included in a speaker gain table (801) stored in a memory (130) of the electronic device (101); and
based on the folding angle being included in the speaker gain table (801), reduce (707) the volume of the speaker (230) by applying a speaker gain value set to correspond to the folding angle.

5. The electronic device of any one of claims 1 to 4, wherein the at least one processor (120) is configured to:
sequentially identify (503; 605; 703; 903) a folding angle before the fully folded state; and
sequentially reduce (507; 609; 707; 907) the volume of the speaker (230) with the speaker gain value set to correspond to the detected folding angle.

6. The electronic device of any one of claims 1 to 5, wherein the at least one processor (120) is configured to:
based on the folding angle being (909) a specified second threshold angle, identify that the first housing area (211) and the second housing area (213) are immediately before the fully folded state and reduce (911) the volume of a transmission output signal for a specified time period.

7. The electronic device of any one of claims 1 to 8, wherein the at least one processor (120) is configured to, in case that the first housing area (211) and the second housing area (213) are in a stopped state in which folding is stopped before the fully folded state while being folded, maintain (513; 615; 713; 917) a call volume set in a state where the first housing area (211) and the second housing area (213) are open or maintain (513; 615; 713; 917) a speaker volume corresponding to a current folding angle as a call volume.

8. A method for an operation of an electronic device (101), comprising:
identifying (503; 605; 703; 903) a folding angle between the first housing area (211) and the second housing area (213) while the first housing area (211) and the second housing area (213) of the electronic device (101) are in the middle of being folded;
based on the folding angle being a first threshold angle, reducing (507; 609; 707; 907) the volume of at least one speaker (230) of the electronic device (101) to a specified value; and
based on identifying (509; 611; 709; 913) that the first housing area (211) and the second housing area (213) are in the fully folded state, performing a call in the fully folded state.

9. The method of claim 8, further comprising:
performing a call while the first housing area (211) and the second housing area (213) are in the open state; and
based on the movement of the first housing area (211) or the second housing area (213) or a distance change of the first housing area (211) and the second housing area (213), identifying (501; 601; 701; 901) a state in which the first housing area (211) and the second housing area (213) are in the middle of being folded in the open state.

10. The method of claim 8 or 9, further comprising:
detecting (603) the folding speed while the first housing area (211) and the second housing area (213) are in the middle of being folded by using at least one sensor; and
in case that the folding speed exceeds a specified threshold speed, identifying that the first housing area (211) and the second housing area (213) are in the middle of being folded fast and reducing (609) the volume of the speaker (230) to the specified value without the detection of the folding angle, or
in case that the folding speed is less than the specified threshold speed, identifying (607) whether the folding angle is less than or equal to the specified first threshold angle.

11. The method of any one of claims 8 to 10, wherein the reducing (507; 609; 707; 907) of the volume of the at least one speaker (230) to a specified value comprises:
identifying (705) whether the folding angle is included in a speaker gain table (801) stored in a memory (130) of the electronic device (101); and
based on the folding angle being included in the speaker gain table (801), reducing (707) the volume of the speaker (230) by applying a speaker gain value set to correspond to the folding angle.

12. The method of any one of claims 8 to 11, wherein the reducing (507; 609; 707; 907) of the volume of the at least one speaker (230) to a specified value comprises sequentially reducing the volume of the speaker (230) to the speaker gain value set to correspond to the folding angle sequentially detected before the fully folded state.

13. The method of any one of claims 8 to 12, wherein the reducing of the volume of the at least one speaker (230) to a specified value comprises, based on the folding angle being a specified second threshold angle, identifying that the first housing area (211) and the second housing area (213) are immediately before the fully folded state and reducing the volume of a transmission output signal for a specified time period.

14. The method of any one of claims 8 to 13, further comprising, in case that the first housing area (211) and the second housing area (213) are in a stopped state in which folding is stopped before the fully folded state while being folded, maintaining a call volume set in an open state of the first housing area (211) and the second housing area (213) or maintaining a speaker volume corresponding to a current folding angle as a call volume.

15. A non-transitory storage medium configured storing a program (140), wherein the program (140), when executed by a processor (120) of an electronic device (101), comprises executable instructions configured to cause the electronic device (101) to:
identifying (503; 605; 703; 903) a folding angle between a first housing area (211) of the electronic device (101) and a second housing area (213) of the electronic device (101) while the first housing area (211) and the second housing area (213) are in the middle of being folded;
based on the folding angle being a first threshold angle, reducing (507; 609; 707; 907) a volume of at least one speaker (230) of the electronic device (101) to a specified value; and
based on identifying (509; 611; 709; 913) that the first housing area (211) and the second housing area (213) are in a fully folded state, performing a call in the fully folded state.
